# EUROPÄISCHE PATENTSCHRIFT

(11) **EP 3 081 821 B1**
(45) Veröffentlichungstag und Bekanntmachung des Hinweises auf die Patenterteilung: **29.11.2017**
(21) Anmeldenummer: 15163444.1
(22) Anmeldetag: 14.04.2015
(51) Int. Cl.: F15B 15/18, F16K 31/122

(54) **VENTILANTRIEBE UND VENTILANORDNUNGEN**
VALVE DRIVES AND VALVE ASSEMBLIES
ACTIONNEURS DE VANNES ET SYSTÈMES DE VANNES

(43) Veröffentlichungstag der Anmeldung: 19.10.2016
(73) Patentinhaber: Siemens Aktiengesellschaft, 80333 München (DE)
(72) Erfinder: Obrecht, Klaus, 76534 Baden-Baden (DE); Plakinger, Toni, 76332 Bad Herrenalb / Neusatz (DE); Wetzel, Martin, 76437 Rastatt (DE); Wiegand, Armin, 77839 Lichtenau (DE)
(74) Vertreter: Maier, Daniel Oliver

(56) Entgegenhaltungen:
- CH-A5- 591 651
- DE-A1-102014 204 496
- US-A- 4 648 245

## Beschreibung

Die vorliegende Offenbarung bezieht sich auf eine Ventilanordnung, umfassend einen Ventilantrieb, insbesondere auf einen hydraulischen Ventilantrieb.

Verschiedene technische Lösungen für Ventilantriebe sind aus dem Stand der Technik bekannt. Ein Thema ist dabei immer, dass für große Ventile große Federkräfte notwendig sind, damit das Ventil, beispielsweise auch bei Gegendruck, dicht schließt. Grundsätzlich sind folgende Lösungen bekannt bzw. im Markt:
Eine Lösung besteht in der Verwendung zweier seriell angeordneter Sicherheitsabsperrventile, die das Ventil nur öffnen und schließen können. Die Änderung der Gasmenge erfolgt über eine motorisch angetriebene, vorzugsweise drehbare Klappe, die nicht dicht schließend ist. Die Klappe wird über einen Motor, beispielsweise über einen Synchronmotor oder über einen Schrittmotor, an bestimmte Positionen gefahren, die mittels einer Positionsrückmeldung detektiert wird. Die Rückmeldung erfolgt über ein Potentiometer, Hallgeber, Lichtschanke und / oder über nockenbetriebene Schalter. Der Klappenwinkel korrespondiert zur jeweiligen Durchflussrate des Gases. Nachteilig an dieser Lösung ist, dass die Klappe nicht dicht schließend ist. Mithin sind zwei weitere auf/zu Sicherheitsventile notwendig.

Gemäß einer weiteren Lösung wird ein Ventil über einen Stößel in seinem Hub geändert, wobei der Stößel magnetisch angetrieben wird. Mit der Stärke des Stromes durch den Magneten wird der Ventilhub und damit die Durchflussrate des Gases variiert. Bei großen Ventilen sind aufgrund der großen Flächen große Federkräfte notwendig, damit das Ventil ohne Ansteuerung dicht schließt. Zum Öffnen oder zum Halten des Stößels in einer Position sind daher große Ströme und / oder viele Kupferdrahtwicklungen notwendig.

Ferner kann ein kleines Servo-Magnetventil mit kleinen Flächen und kleiner Federkraft und daher relativ kleinen Strömen einen zum eigentlichen Hauptgasventil parallel liegenden Servokreis betätigen. Mithin wird in Abhängigkeit vom Strom ein Gasdruck bestimmt, der über eine Membran das Hauptgasventil steuert. Da die Energie zum Ansteuern des Hauptgasventils aus dem Gasnetz kommt, kann der Steuerstrom recht klein sein und trotzdem eine ausreichende Federkraft für ein großes Ventil gewählt werden. Das Ventil schließt folglich dicht. Die Durchflussrate des Gases korrespondiert dabei mit dem anliegenden Druck am Hauptgasventil, der wiederum durch die Öffnung des Servokreises bestimmt wird. Dieser hängt aber vom Hub des Servo-Magnetventils ab, der wiederum vom Strom durch die Spule bestimmt wird. Nachteilig an jener Lösung ist der komplexe Aufbau. Die Lösung erweist sich auch bei großen Durchflussraten und kleinen Drücken als kritisch, weil nicht genügend Steuerdruck zum Öffnen einer Schließfeder mit großer Federkraft aufgebaut werden kann. Im Vergleich zu einer zusätzlichen Klappe ist eine solche Lösung sehr aufwendig und teuer.

Hydraulische Antriebe haben sich bisher nur für auf/zu-Ventile durchgesetzt, da druckveränderliche Pumpen oder elektrisch einstellbare hydraulische Druckregler bisher im Vergleich zur den oben genannten Lösung mit zusätzlicher Klappe zu aufwendig und daher zu teuer waren.

Eine gattungsgemäße Ventilanordnung wird aus der DE102014204496A1 bekannt.

### Technische Aufgabe und Vorteile

Der vorliegenden Offenbarung liegt die Aufgabe zu Grunde, einen möglichst dicht schließenden Ventilantrieb zum Öffnen von Ventilen mit großen Schließkräften bereitzustellen.
Der vorliegenden Offenbarung liegt zudem die Aufgabe zu Grunde, eine Ventilanordnung so anzusteuern, dass der Hub des Stößels und damit die Durchflussrate des Mediums (des Gases) in Abhängigkeit von der Amplitude des Ansteuersignals eingestellt wird.

Der vorliegenden Offenbarung liegt darüber hinaus die Aufgabe zu Grunde, eine analog einstellbare Ventilanordnung gleichzeitig als Sicherheits-Absperreinrichtung zu verwenden.

Der vorliegenden Offenbarung liegt ferner die Aufgabe zu Grunde, einen Ventilantrieb über die (Amplitude der) Versorgungspannung und / oder über die Amplitude des Versorgungsstromes einzustellen und / oder über den Versorgungsstrom einzustellen.

Der vorliegenden Offenbarung liegt weiterhin die Aufgabe zu Grunde, einen Ventilantrieb über einen Regelkreis, in welchem Strom und / oder Spannung Messgrößen sind, einzustellen.

Der vorliegenden Offenbarung liegt die weitere Aufgabe zu Grunde, eine (analog einstellbare) Ventilanordnung umfassend einen Antrieb, ein Ventil, und einen Strömungssensor zu nutzen zur Erfassung der Durchflussrate des Mediums (des Gases) und zur Regelung der Durchflussrate mit der (hydraulischen) Ventilanordnung als Aktor. Dabei ist der Strömungssensor vorzugsweise ein Massenstromsensor oder ein Differenzdrucksensor.

Der vorliegenden Offenbarung liegt die zusätzliche Aufgabe zu Grunde, eine (analog einstellbare) Ventilanordnung umfassend einen Antrieb und ein Ventil zu nutzen zur Erfassung des Hubs des Stößels und / oder zur Regelung des Hubs mit der (hydraulischen) Ventilanordnung als Aktor. Vorzugsweise wird dabei die Durchflussrate direkt mit dem Hub festgelegt.

Der vorliegenden Offenbarung liegt auch als Aufgabe zu Grunde, eine Ventilöffnung einer von zwei in Serie geschalteten Ventilanordnungen auf einen vorgegebenen Sollwert einzustellen und / oder zu regeln. Die Einstellung und / oder Regelung auf einen vorgegebenen Sollwert erfolgt dabei vor dem Öffnen der anderen Ventilanordnung. Damit fließt direkt nach dem Öffnen der anderen Ventilanordnung die für die Zündlast notwendige Gasmenge.

### Kurze Beschreibung der Figuren

Verschiedene Details werden dem Fachmann anhand der folgenden detaillierten Beschreibung zugänglich. Die einzelnen Ausführungsformen sind dabei nicht einschränkend. Die Zeichnungen, welche der Beschreibung beigefügt sind, lassen sich wie folgt beschreiben:
Fig 1 Gasventil mit hydraulischem Antrieb und einer Schwingankerpumpe zur Erzeugung des Öldrucks.
Fig 2 Schaubild zur Einstellung des Drucks innerhalb der Schwingankerpumpe anhand der Amplitude der Antriebsversorgung.
Fig 3 Schaubild zum Hub der Schwingankerpumpe über der Amplitude der Antriebsversorgung.
Fig 4 Schema einer typischen Verwendung hydraulischer Ventile.
Fig 5 Schema eines Schaltkreises zur Einstellung der Amplitude der Antriebsversorgung.
Fig 6 Weiteres Schema eines Schaltkreises zur Einstellung der Amplitude der Antriebsversorgung.

### Detaillierte Beschreibung

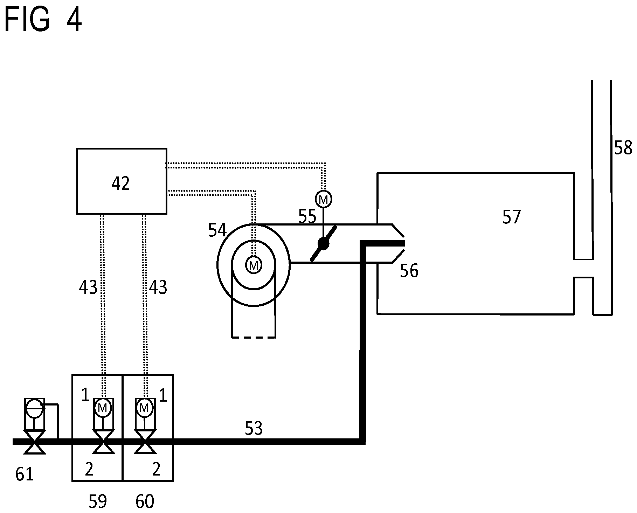

Die bestimmungsgemäße typische Verwendung hydraulischer Ventile ist in Fig. 4 dargestellt. In einem Kessel 57 mit Feuerraum und Wärmetauscher ist ein Brenner 56 angebracht, der eine Gaszufuhr 53 hat. Die Luft wird dem Brenner direkt über ein steuerbares und / oder regelbares Gebläse 54 zugeführt, wobei die Luftmenge über eine motorisch einstellbare Luftklappe 55 zusätzlich zur Einstellung über das Gebläse verändert werden kann. In einer speziellen Ausführungsform kann auch einer der beiden Luft-Aktoren entfallen. Die Luft-Aktoren werden beispielsweise über die Steuer- und / oder Regeleinrichtung 42 angesteuert, die damit die Luftmenge für jeden Leistungspunkt auf einen vorgegebenen Wert einstellt. Das Abgas wird durch einen Schornstein 58 abgeführt.

In der Gaszufuhr 53 sind üblicherweise zwei Sicherheits-Absperreinrichtungen 59 und 60 angeordnet. Die Absperreinrichtungen 59 und 60 öffnen die Gaszufuhr entsprechend der Anforderung der Steuer- und / oder Regeleinrichtung 42 über die Zuleitung 43, wenn der Brenner in Betrieb sein soll. Entsprechend wird geschlossen, wenn der Brenner abgeschaltet werden soll. Eine Sicherheitsabsperreinrichtung umfasst dabei einen Antrieb, insbesondere einen hydraulischen Antrieb 1, und einem Sicherheits-Absperrventil 2. Außerdem wird über die Ansteuerung und / oder Regelung 42 auch beim Betrieb der einer vorgegebenen Leistung entsprechenden Luftmenge die richtige Stellung für den (hydraulischen) Antrieb 1 eingestellt / eingeregelt. Damit wird die richtige Einstellung des Gasventils 2 und daher die der Luftmenge zugeordnete Gasmenge eingestellt / eingeregelt.

Mit anderen Worten, die vorliegende Offenbarung lehrt einen Ventilantrieb zusätzlich umfassend eine Zuleitung 43 und mindestens eine Steuer- und / oder Regeleinrichtung 42, wobei die mindestens eine Zuleitung 43 die mindestens eine Spule 22, 23 im Antrieb 1 und die mindestens eine Steuer- und / oder Regeleinrichtung 42 elektrisch kontaktiert.

Die vorliegende Offenbarung lehrt zudem einen Ventilantrieb, wobei die Steuer- und / oder Regeleinrichtung 42 ausgebildet ist, ein durch die mindestens eine Spule 22, 23 im Antrieb 1 erzeugtes Magnetfeld durch Anlegen und / oder durch Variieren und / oder durch (getaktetes) Schalten eines Stromes und / oder einer Spannung (analog) einzustellen.

Für die Zuordnung der Gasmenge muss normalerweise nur eine der beiden Sicherheits-Absperreinrichtungen analog eingestellt werden, während die andere Einrichtung nur öffnet oder schließt. Aus Sicherheitsgründen ist dazu eine Redundanz notwendig. Damit bei einer vorgegebenen Stellung des Gasventils 2 sich auch ein definierter Gasstrom in der Leitung 53 ergibt, ist vor den beiden Sicherheits-Absperreinrichtungen ein Druckregler 61 angeordnet. Der Druckregler 61 stellt den Gasdruck auf einen konstanten Wert ein, um Strömungsänderungen durch Druckschwankungen in der Gasversorgung auszugleichen. Der Druckregler 61 kann auch mit in die erste Sicherheits-Absperreinrichtung 59 integriert sein.

Hydraulische Ventile haben den Vorteil, dass sie große Schließkräfte bei geringer Leistung aufweisen. Dies gilt insbesondere dann, wenn als Pumpe zur Erzeugung des hydraulischen Drucks eine kostengünstige Schwingankerpumpe verwendet werden kann. Die einfach aufgebauten Schwingankerpumpen geben Periode für Periode eine quantifizierte Öl-Menge ab, wobei der Öldruck dann über einen fest eingestellten *Überlauf -* de Facto ein Öldruckregler - eingestellt wird. Dieser Öldruck ist dabei sehr groß, so dass große Federkräfte überwunden werden können, die zum sicheren Schließen großer Ventile notwendig sind. Die Leistung der Schwingankerpumpe ist dabei sehr klein, weil nur der Druck erhalten werden muss und die gepumpte Ölmenge sehr klein sein kann. Während des Öffnens wird die Energie integriert, so dass das Ventil zwar langsamer als bei anderen Systemen, aber ausreichend schnell öffnen kann.

Als Öle in der Schwingankerpumpe kommen unter anderem teilsynthetische und synthetische (Hydraulik-)Öle in Betracht. Diese können beispielsweise brennbar, schwer entflammbar oder entflammbar sein.

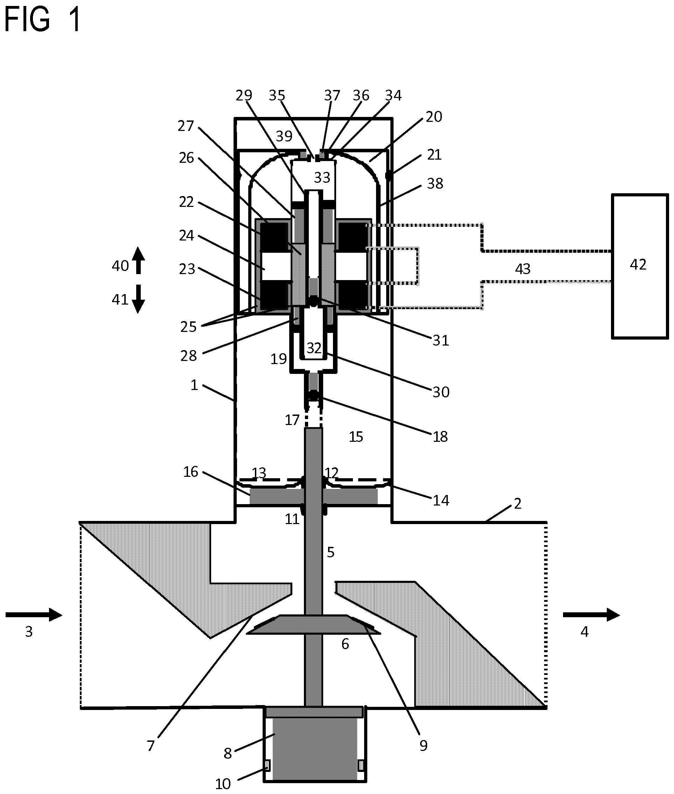

Das Prinzip eines Gasventils mit hydraulischem Antrieb und einer Schwingankerpumpe zur Erzeugung des Öldrucks ist in Fig. 1 dargestellt.

Ein hydraulischer Antrieb 1 ist fest auf ein Gasventil 2 montiert. Das Gasventil hat einen Einlass, an den in Fließrichtung 3 das Gas in das Ventil eintritt und einen Auslass, an dem das Gas in Fließrichtung 4 aus dem Ventil austritt. Antrieb 1 öffnet das Ventil, indem eine Kraft auf Stößel 5 vom Antrieb 1 ausgeübt wird und Stößel 5 nach unten bewegt wird. Dabei hebt der Ventilteller 6 vom Ventilsitz 7 ab. Mit der Bewegung von Stößel 5 nach unten wird auch der mechanische Kraftspeicher, insbesondere die Schließfeder 8, beim Öffnen des Ventils zusammengedrückt. Soll das Ventil geschlossen werden, so wird die Kraft von Stößel 5 weggenommen. Die Schließfeder 8 drückt Stößel 5 und Ventilteller 6 wieder nach oben, bis der Ventilteller 6 an den Ventilsitz 7 gedrückt wird. Auf dem Ventilteller 7 ist eine Dichtung 9 aufgebracht.

Als Schließfedern 8 kommen Spiralfedern, Tellerfedern und / oder Torsionsfedern in Betracht. Geeignete Ausführungen dieser Federn können auf Zug und / oder auf Druck belastbar sein.

Im geschlossenen Zustand des Gasventils 2 drückt die Schließfeder 8 über Stößel 5 und Ventilteller 6 die Dichtung 9 auf den Ventilsitz 7. Damit wird der Gasfluss komplett unterbrochen. Die Dichtung 7 dichtet das Ventil so ab, dass keine Leckage auftritt. Ist das Gasventil ganz geöffnet, so wird der Stößel 5 bis an den Anschlag 10 gedrückt.

Gemäß einer bevorzugten Ausführungsform kann der Stößel 5 ein Kontinuum von Ventilstellungen zwischen vollständig geöffnet und vollständig geschlossen einstellen. Gemäß einer weiteren Ausführungsform lässt sich anhand des Stößels 5 mindestens eine diskrete Ventilstellung zwischen vollständig geöffnet und vollständig geschlossen einstellen. Gemäß besonderen Ausführungsformen eignet sich der Stößel 5 zur Einstellung / Einregelung von zwei oder drei oder vier oder fünf oder sieben oder acht oder zehn oder zwölf diskreten Ventilstellungen. Gemäß speziellen Ausführungsformen eignet sich der Stößel 5 zur Einstellung / Einregelung von sechzehn oder zweiunddreißig oder vierundsechzig diskreten Ventilstellungen.

Stößel 5 gelangt durch Durchführung 11 in den gasführenden Raum von Gasventil 2, wobei Durchführung 11 den gasführenden Raum von der Umgebung abdichtet. Weiter gelangt Stößel 5 durch Durchführung 12 in den ölführenden Raum 15 des Antriebs 1, wobei Durchführung 12 den ölführenden Raum von der Umgebung abdichtet. Es ist dabei grundsätzlich möglich aber nicht notwendig, den Stößel 5 zwischen den Durchführungen 11 und 12 zu unterbrechen und montierbar zu gestalten. Damit können Ventil 2 und Antrieb 1 voneinander getrennt werden. Durchführung 12 ist auf einer öldurchlässigen Halterung 13, beispielsweise einer Lochplatte, mit dem Antrieb 1 fest verbunden. Die Trennung des Öl-Vorratsraums 15 von der Umgebung unter der öldurchlässigen Halterung 13 erfolgt mit einer Membrane und / oder mit einem Balg 14. Die Membrane und / oder der Balg 14 können beispielsweise aus Mylar®, Polyester, Metallfolien, Gummi und /oder beschichtetem Gummi bestehen. Gemäß einer speziellen Ausführungsform erfolgt die Trennung des Öl-Vorratsraums 15 von der Umgebung unter der öldurchlässigen Halterung 13 mit einer gedichteten Kolbenanordnung.

Ein mechanischer Kraftspeicher, insbesondere eine Feder 16, drückt die Membrane und / oder den Balg 14 auf das sich im Öl-Vorratsraums 15 befindliche Hydraulik-Öl. Damit werden Volumenänderungen, die beispielsweise durch Temperaturschwankungen verursacht werden, ausgeglichen. Der Fachmann wählt eine geeignete Ausführungsform für den mechanischen Kraftspeicher beispielsweise unter den zuvor für die Schließfeder 8 genannten Ausführungsformen.

An seinem oberen Ende ist Stößel 5 im Innenraum hohl ausgeführt und hat Einlassöffnungen 17, die das Hydraulik-Öl vom Öl-Vorratsraums 15 in den Innenraum des Stößels 5 führen. Der Stößel 5 ist oben zu einem Becher 19 erweitert, in dem sich der untere Teil des Schwingankers bewegt. Über den Einlassöffnungen 17 ist im Innenraum des Stößels 5 ein Ventil 18 eingebracht, das den Ölfluss vom Öl-Vorratsraums 15 durch die Einlassöffnungen 17 zum Becher 19 hin zulässt. Gleichzeitig wird der Rückfluss aus dem Becher 19 in den Öl-Vorratsraums 15 aber unterbunden. Der Becher 19 ist fest mit der Schwingankerpumpe 20 verbunden. Bewegt sich der Stößel 5 nach unten, so bewegen sich auch Becher 19 und die gesamte Schwingankerpumpe 20 mit nach unten. Dabei wird der Öl-Vorratsraums 15 vom druckführenden Raum 39 mit einem Dichtungsring 21 abgetrennt, der die beiden Druckniveaus von Raum 15 und Raum 39 voneinander abdichtet. Der Dichtungsring 21 liegt zwischen Schwingankerpumpe 20 und der Gehäuse-Innenwand des Antriebs 1 und bewegt sich mit der Schwingankerpumpe mit.

Mit anderen Worten, die vorliegende Offenbarung lehrt einen Ventilantrieb umfassend eine Schwingankerpumpe 20, insbesondere eine hydraulische Schwingankerpumpe 20, mit einem Stößel 5, der ausgebildet ist, sich zusammen mit der Schwingankerpumpe 20 zu bewegen und mit einem Ventilteller 6 mechanisch so verbunden zu werden, dass sich der Ventilteller 6 durch den Stößel in eine Richtung bewegen lässt.

Die Schwingankerpumpe 20 besteht aus einem festen Trägermaterial, in dem die beiden Stator-Spulen 22 und 23 montiert sind. Zwischen den beiden Spulen 22 und 23 liegt ein ringförmiger Magnet, insbesondere ein Permanentmagnet 24, der so magnetisiert ist, dass die Magnetfeldlinien radial verlaufen, also vom Innenloch des Magneten durch den Magneten nach außen. Beispielsweise befindet sich der Nordpol am Innenring und damit der Südpol am Außenring des Magneten.

Gemäß einer speziellen Ausführungsform wird auf eine der beiden Spulen 22 oder 23 verzichtet. Mithin erzeugt nur eine der Spulen 22 oder 23 ein Magnetfeld, welches sich demjenigen des Magneten 24, insbesondere des Permanentmagneten 24, überlagert.

Mit anderen Worten, die vorliegende Offenbarung lehrt eine Schwingankerpumpe 20 umfassend mindestens eine Spule 22, 23, die geeignet ist, von einem elektrischen Strom durchflossen zu werden und ein Magnetfeld zu erzeugen.

Der Magnetkreis des Permanentmagnets 24 wird über Magnetbleche 25 statorseitig geschlossen. In einer bevorzugten Ausführungsform bestehen die Magnetbleche 25 aus kornorientiertem Stahl, wie er beispielsweise für Transformatoren verwendet wird. An der Innenseite des Permanentmagneten 24 befindet zwischen den Magnetblechen 25 und dem Permanentmagneten 24 ein Spalt, so dass der Magnetkreis dort nur über den Schwinganker geschlossen werden kann.

Der Schwinganker besteht aus einem ringförmigen Weicheisen 26, durch dessen Mitte ein Röhrchen 29 geführt ist. Das Röhrchen 29 erweitert sich unterhalb des Weicheisens zu einem offenen Becher 32, der sich im Becher 19 des Stößels 5 bewegt. Im Röhrchen 29 befindet sich ein Ventil 31, das den Ölfluss von Becher 32 durch Röhrchen 29 in den Druckraum 33 zulässt. Zugleich wird der Ölfluss von Druckraum 33 zurück in Becher 32 aber unterbunden. Der Schwinganker aus Weicheisen 26, Röhrchen 29, Becher 32 und Ventil 31 kann sich in Richtung der gezeigten Pfeile 40 und 41 hin und her bewegen. Zusammen mit den beiden mechanischen Kraftspeichern, insbesondere Federn 27 und 28, bildet der Schwinganker ein Feder-Masse-Pendel, das in einem vorgegebenen Frequenzbereich in den Richtungen 40, 41 schwingungsfähig ist. Gemäß einer speziellen Ausführungsform wird auf einen der beiden mechanischen Kraftspeicher 27 oder 28 verzichtet. Demnach bildet der Schwinganker zusammen mit nur einem mechanischen Kraftspeicher ein Feder-Masse-Pendel. Eine typische Schwingung liegt in einem Bereich zwischen 20 Hz und 100 Hz, vorteilhaft zwischen 30 Hz und 90 Hz, insbesondere aber bei den Netzfrequenzen 50 Hz bzw. 60 Hz. In besonders gelagerten Fällen liegt eine typische Schwingung im Bereich um 400 Hz.

Mit anderen Worten, die vorliegende Offenbarung lehrt eine Schwingankerpumpe 20 umfassend mindestens einen beweglichen Schwinganker 26, 29, 32, 31, der mindestens ein Ventil 31 umfasst, und die Schwingankerpumpe 20 umfasst mindestens einem mechanischen Kraftspeicher 27, 28, der derart mit dem mindestens einen beweglichen Schwinganker 26, 29, 32, 31 verbunden ist, dass der bewegliche Schwinganker 26, 29, 32, 31 zusammen mit dem mindestens einen mechanischen Kraftspeicher 27, 28 ein Feder-Masse-Pendel bildet.

Der obere Teil des Röhrchens führt in den Druckraum 33 der Schwingankerpumpe. Das Öl gelangt von dort durch die Düse 35 und ein Loch des Trägermaterials der Schwingankerpumpe 20 in den druckführenden Raum 39. Das Loch im Trägermaterial 20 hat einen deutlich größeren (beispielsweise runden, dreieckigen, ovalen, viereckigen oder sechseckigen) Querschnitt als die Düse 35. Düse 35 und Schließkolben 36 sind beweglich auf eine Membrane und/oder auf einen Balg 34 angebracht. Schließkolben 36 dichtet die Kanäle 38 im Trägermaterial 20 der Pumpe ab, wenn die Membrane nach oben gedrückt wird. Wird die Membrane 34 nicht nach oben gedrückt, öffnet der Schließkolben 36 und es gelangt Öl über die Kanäle 38 aus dem Druckraum 39 in den Öl-Vorratsraums 15 zurück. Der mechanische Kraftspeicher, insbesondere die Feder 37, drückt den Schließkolben 36 nach unten, so dass bei gleichem Drücken in den Räumen 37 und 38 das Öl durch die Abströmkanäle 38 fließt. Der Fachmann wählt eine geeignete Ausführungsform für den mechanischen Kraftspeicher beispielsweise unter den zuvor für die Schließfeder 8 genannten Ausführungsformen.

Mit anderen Worten, die vorliegende Offenbarung lehrt einen beweglichen Schwinganker 26, 29, 32, 31, der angeordnet ist, um sich zusammen mit dem mindestens einen Ventil 31 unter dem Einfluss eines durch die mindestens eine Spule 22, 23 aufgebauten Magnetfeldes entlang einer vorgegebenen Richtung 41 zu bewegen.

Die vorliegende Offenbarung lehrt zudem eine Schwingankerpumpe 20 umfassend mindestens eine Verengung 35, insbesondere eine Düse 35, wobei die Verengung 35 den Raum 33 der Schwingankerpumpe 20 von einem Raum 39 außerhalb der Schwingankerpumpe 20 separiert.

Die vorliegende Offenbarung lehrt darüber hinaus eine Schwingankerpumpe 20 umfassend mindestens eine Verengung 35, insbesondere eine Düse 35, wobei die Verengung 35 ausbildet ist für den Durchgang eines Fluids, insbesondere eines Öls, insbesondere eines Hydraulik-Öls, vom Raum 33 der Schwingankerpumpe 20 in einen Raum 39 außerhalb der Schwingankerpumpe 20.

Die Stator-Spulen 22 und 23 werden mittels einer Wechselspannungsquelle aus einer Steuer- und / oder Überwachungsschaltung 42 über die Zuleitungen 43 versorgt. Die Frequenz der Wechselspannung liegt im Bereich des Frequenz-Arbeitsbereichs des Schwingankers, also typischerweise zwischen 20 Hz und 100 Hz, vorteilhaft zwischen 30 Hz und 90 Hz, insbesondere aber bei den Netzfrequenzen 50 Hz bzw. 60 Hz. In besonders gelagerten Fällen liegt die Frequenz im Bereich um 400 Hz.

Liegt keine Spannung an den Spulen 22, 23, so drückt der mechanische Energiespeicher, insbesondere die Feder 8, den Stössel 5 und die Schwingankerpumpe 20 nach oben. Der Ventilteller 6 drückt die Dichtung 9 an den Ventilsitz 7. Der Gas-Durchfluß durch das Ventil 2 wird unterbunden. Federkraft der Feder 8 und / oder Dichtung 9 sind so dimensioniert, dass keine oder nur eine absolut vernachlässigbare Leckage auftritt und so das Ventil als Sicherheits-Absperrventil betrieben werden kann.

Mit anderen Worten, die vorliegende Offenbarung lehrt eine Ventilanordnung, wobei die Ventilanordnung geeignet ist, das Ventil 2 derart dicht zu schließen, dass die Ventilanordnung als Sicherheits-Absperreinrichtung ausgebildet ist.

Zum Öffnen des Ventils schaltet die Steuer- und / oder Überwachungsschaltung 42 eine Wechselspannung über die Zuleitungen 43 an die Spulen 22, 23. Die Spulen 22 und 23 sind gleichsinnig gewickelt. Ist beispielsweise in einer Halbwelle der Wechselspannung das Magnetfeld innerhalb des Spulenquerschnitts der Spule 22 in gleicher Richtung wie das Magnetfeld des Permanentmagneten 24, so addieren sich beide Magnetfelder. In gleichem Maße subtrahieren sich die Magnetfelder von Spule 23 und Permanentmagnet 24 innerhalb des Spulenquerschnitts von 23. Das Weicheisen 26 des Schwingankers wird in Richtung 40 in die Spule 22 gezogen, in den Bereich des stärkeren Magnetfelds. In der nächsten, umgekehrten Halbwelle der Wechselspannung sind die Magnetfelder in den Spulen 22 und 23 genau umgekehrt gepolt. In Spule 23 addieren sich, in Spule 22 subtrahieren sich die Magnetfelder. Jetzt wird das Weicheisen 26 des Schwingankers in Richtung 41 gezogen, da sich dort das stärkere Magnetfeld befindet. Der Schwinganker pendelt so im Takt der Wechselspannung hin und her. Der (lineare) mechanische Kraftspeicher, insbesondere die (linearen) Federn 27 und 28, bewirken, dass die Schwingungsbewegung sinusförmig wird. Der Fachmann wählt eine geeignete Ausführungsform für den mechanischen Kraftspeicher beispielsweise unter den zuvor für die Schließfeder 8 genannten Ausführungsformen. Die Sinusform der Schwingungsbewegung ist dabei (näherungsweise) unabhängig von der Höhe der Kraftänderung des Magnetfeldes auf das Weicheisen 26 über der Wegstrecke.

Mit dem Weicheisen 26 werden auch Röhrchen 29 und Becher 32 hin und her bewegt. Bewegt sich der Schwinganker in Richtung 40, so verhindert Ventil 31 den Rückfluss des Öls von Druckraum 33 in Becher 32. Eine Ölmenge, die vom Hub des Schwingankers aber auch vom Gegendruck im Raum 39 abhängt, wird dabei in den Druckraum 33 befördert und von dort durch die Düse 35 gepresst. Die durch die Viskosität des Öls verursachte Reibungskraft in der Düse wird dabei durch einen höheren Druck des Öls in Raum 33 gegenüber Raum 39 überwunden. Die Energieumwandlung durch Reibungskraft hängt ab von der Geschwindigkeit, mit der das Öl durch die Düse 35 gepresst wird. Die Geschwindigkeit hängt wiederum vom Hub des Schwingankers und vom Differenzdruck zwischen den Räumen 33 und 39 ab. Ist der Druck in Raum 39 ausreichend gering, wirkt auf den Balg / die Membrane 34 eine resultierende Kraft, die die Federkraft von Feder 37 überwindet. Damit wird der Schließkolben 36 nach oben gedrückt und so die Abströmkanäle 38 verschlossen. Die Ölmenge wird durch die Düse 35 in den Druckraum 39 gedrückt und gleichzeitig die gesamte Schwingankerpumpe 20 mit Stößel 5 und Ventilteller 6 nach unten bewegt.

Während sich der Schwinganker in Richtung 40 bewegt, ist Ventil 18 geöffnet und Öl wird durch die Einlassöffnungen 17 aus dem ölführenden Raum 15 in den Becher 19 angesaugt.

Bewegt sich der Schwinganker in Richtung 41, so schließt Ventil 18, Becher 32 verdrängt das Öl aus Becher 19. Damit wird Öl aus Becher 19 durch das geöffnete Ventil 31 in den Druckraum 33 gefördert. Aufgrund des vergrößerten Querschnitts von Becher 32 gegenüber Röhrchen 29 wird aus Becher 19 mehr Ölvolumen verdrängt, als in Druckraum 33 frei wird. Folglich wird jetzt auch Öl durch die Düse 35 gepresst. Wenn der Gegendruck in Druckraum 39 ausreichend gering ist, wird auch bei diesem Hub der Schließkolben 36 geschlossen und die Abströmkanäle 38 werden abgedeckt. Das Öl wird durch die Düse 35 in den Raum 39 gedrückt. Währenddessen bewegt sich die Pumpe 20 mit Stößel 5 und Ventilteller 6 nach unten.

So werden in beiden Halbwellen der angelegten Wechselspannung Pumpe 20, Stössel 5 und Ventilteller 6 nach unten bewegt. Solange die Pumpe sich nach unten bewegen kann, kann Öl durch die Düse 35 gefördert werden. Bei ausreichendem Hub des Schwingankers ist der Druck im Raum 33 aufgrund des Druckverlustes in Düse 35 immer größer als in Raum 39. Schließkolben 36 deckt in diesem Fall die Abströmöffnungen 38 immer ab. Erreicht der Stößel 5 den Anschlag 10, kann sich die Pumpe nicht mehr nach unten bewegen. Es kann in keiner der beiden Halbwellen Öl durch die Düse 35 in den Druckraum 39 gefördert werden. Zwischen Raum 33 und Raum 39 besteht kein Druckunterschied mehr. Aufgrund des hohen Gegendrucks wird das Öl durch die Düse 35 wesentlich langsamer gefördert. Die durch die Viskosität des Öls erzeugte Kraft auf den Balg oder die Membrane 34 ist geringer, so dass die Kraft der Schließfeder 37 nicht mehr überwunden werden kann. Der Schließkolben 36 verschließt die Abströmkanäle 38 nicht mehr und das geförderte Öl wird über die offen liegenden Kanäle 38 wieder in den ÖlVorratsraum 15 zurückgeführt.

Wird die Wechselspannung vom Steuergerät 42 abgeschaltet, so wird kein Öl mehr gefördert und keine Kraft durch ein Durchpressen von Öl durch Düse 35 auf den Balg / die Membrane 34 ausgeübt. Der Schließkolben 36 wird über Feder 37 aufgedrückt und lässt die Abströmkanäle 38 offen. Feder 8 drückt die Pumpe 20 nach oben. Dabei fließt das Öl aus Raum 39 über die Abströmkanäle 38 in den Ölvorratsraum 15 zurück. Schlussendlich drückt der Ventilteller 6 die Dichtungen 9 auf den Ventilsitz 7 und verschließt das Ventil 2 dicht.

Der Abschaltvorgang erfolgt sehr schnell (weniger als eine Sekunde, vorzugsweise weniger als 100 Millisekunden). Der Antrieb 1 eignet sich damit sehr gut für Sicherheitsventile, die schnell verschließbar sein müssen.

Bisher wurden diese Ventile nur für Sicherheits-Auf/Zu-Ventile benutzt. Die von der Steuer- und / oder Überwachungsschaltung 42 zur Verfügung gestellte Spannung 43 war dabei der Einfachheit halber die Netzspannung. Diese Spannung wurde von der Steuer- und / oder Überwachungsschaltung 42 mittels Relais-Kontakten ein- oder ausgeschaltet. Über den oben beschriebenen Vorgang öffnet und / oder schließt das Ventil (vollständig). Hierfür war die Schwingankerpumpe so ausgelegt, dass auch bei Unterspannung ausreichend Druck im Druckraum 33 der Schwingankerpumpe 20 gegenüber dem Druck im Raum 39 bei maximaler Federspannung im vollständig geöffneten Ventil erzeugt wird. Folglich ist bis zu diesem Punkt der Schließkolben 36 immer geschlossen. Erst, wenn Stößel 5 auf den Anschlag 10 trifft, werden die Kräfte und damit die Drükke im Raum 39 so groß, dass weniger Öl durch Düse 35 gedrückt wird und auch langsamer strömt. Der Schließkolben 36 ist dann geöffnet und das Öl fließt durch die Kanäle 38 ab.

Bei sorgfältiger Auslegung des Antriebs 1, insbesondere durch Verwendung einer reibungsarmen Dichtung 21, kann der Antrieb 1 auch für die genaue Positionierung des Stößels 5 benutzt werden. Die Position des Stößels 5 bedingt direkt den Öffnungsquerschnitt des Ventils, insbesondere des Gasventils 2, und bei vorgegebenem Eingangsdruck die durchfließende Gasmenge.

Hierzu muss nur die Amplitude der Wechselspannungsversorgung 43 geändert werden. Ist der Stößel 5 am Anschlag 10 bei voller Amplitude der Versorgung 43, so kann die Amplitude reduziert werden. Dadurch werden die Kraft und der Hub des Schwingankers aus Weicheisen 26, Röhrchen 29 und Verdrängungsbecher 30 eingestellt. Ab einer bestimmten Amplitude reduziert bzw. verlangsamt sich dadurch die Geschwindigkeit und Menge des durch Düse 35 gepressten Öls. Folglich öffnet der Schließkolben 36, Öl strömt über die Kanäle 38 ab. Pumpe und Stößel bewegen sich nach oben (Richtung 40). Dies erfolgt so lange, bis durch die verringerte Federkraft des mechanischen Kraftspeichers, insbesondere der Feder 8, der Druck im Druckraum 39 genügend reduziert ist. Es wird dann wieder eine größere Ölmenge mit größerer Geschwindigkeit durch die Düse 35 gepresst. Der Schließkolben 36 schließt wieder. Die jetzt durch die Düse 35 gepresste Ölmenge und Geschwindigkeit hält den Schließkolben 36 offen. Folglich fließt das Öl einerseits durch die Abströmkanäle 38 ab. Andererseits wird die Kraft auf den Balg / die Membrane 34 so groß, dass der Schließkolben fast noch geschlossen bleibt. Der Stößel 5 bleibt bei seiner Position aufgrund des Kräftegleichgewichts an dem Balg / der Membrane 34. Wird der Druck in Raum 39 geringer, so steigen bei gleicher Wechselspannungsamplitude 44 Geschwindigkeit und Menge des Öls durch Düse 35 wieder an. Der Schließkolben 36 schließt vollständig und es wird Öl in Raum 39 gefördert, bis das oben beschriebene Kräftegleichgewicht eingestellt ist.

Mit anderen Worten, die vorliegende Offenbarung lehrt mindestens ein Ventil 31, das einen ersten Raum 32 und einen zweiten Raum 33 der Schwingankerpumpe 20 separiert und ausgebildet ist, bei einer Bewegung des mindestens einen Ventils 31 in die vorgegebene Richtung 41 zu öffnen, sodass ein Fluid, insbesondere ein Öl, insbesondere ein Hydraulik-Öl, vom ersten Raum 32 in den zweiten Raum 33 strömt.

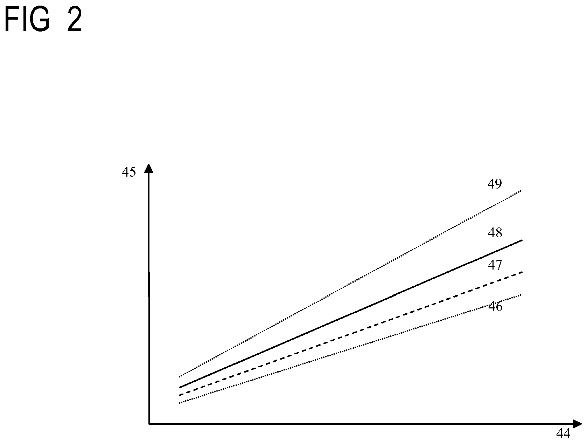

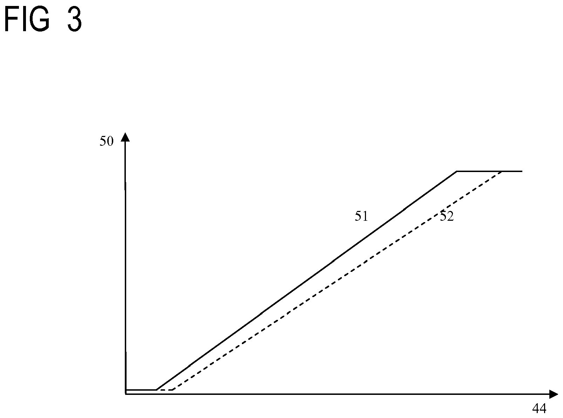

Über die Amplitude 44 der Antriebsversorgung 43 kann somit der Druck 45 im Raum 39 eingestellt werden, wie in Fig. 2 dargestellt. Die Kennlinien 46, 47, 48 und 49 zeigen den Verlauf des Drucks 45 über der Amplitude 44 für jeweils verschiedene Frequenzen des Signals 43. Typische Frequenzen des Wechselspannungssignals 43 liegen im Bereich zwischen 20 Hz und 100 Hz, vorteilhaft zwischen 30 Hz und 90 Hz, insbesondere aber bei den Netzfrequenzen 50 Hz bzw. 60 Hz. In besonders gelagerten Fällen liegt eine typische Frequenz im Bereich um 400 Hz. Wählt man eine Frequenz aus, so ergibt sich der Hub des Stößels 5 über der Amplitude 44. In Fig. 3 ist der Hub 50 über der Amplitude 44 dargestellt. Beispielsweise ergibt sich für die Druckkennlinie 48 über die Federkennlinie des mechanischen Kraftspeichers, insbesondere der Feder 8, eine Hubkennlinie 51 des Stößels 5 über der Amplitude 44. Oder aber für Druckkennlinie 47 mit einer anderen Frequenz die Hubkennlinie 52.

Der Gasstrom durch Ventil 2 ergibt sich dann über die Öffnungscharakteristik, die wesentlich durch die geometrische Form von Ventilteller 6 und Ventilsitz 7 bestimmt wird. Geeignete Formen von Ventilteller 6 und / oder Ventilsitz 7 sind beispielsweise abschnittweise kegelförmige Formen. Eine solche Gestaltung von Ventilteller 6 und / oder Ventilsitz wird in einer speziellen Ausführungsform nur auf eines der Elemente 6, 7 angewendet. In einer weiteren Ausführungsform sind sowohl der Ventilteller 6 als auch der Ventilsitz 7 abschnittsweise kegelförmig ausgebildet.

Gemäß einer weiteren Ausführungsform verlaufen die Querschnitte der Elemente 6 und / oder 7 entlang ringförmiger Stufen. Der Durchmesser der ringförmigen Stufen nimmt vorzugsweise von in Richtung des Stößels 5 ab. In derselben Richtung nimmt die Breite der Stufen zu. Eine entsprechende Anordnung ist in WO2014/131727A1, Fig. 2, Element 12, gezeigt. Ferner ist die Anordnung in WO2014/131727A1, auf Seite 7, Zeilen 15 bis 26 detailliert beschrieben. Auf die zitierten Figuren und Teile der Beschreibung aus WO2014/131727A1 wird hier Bezug genommen.

Durch eine geeignete Profilierung kann auch hier näherungsweise ein linearer Zusammenhang erreicht werden, so dass sich insgesamt ein (im Wesentlichen) linearer Zusammenhang zwischen Amplitude 44 und dem Gasstrom durch Ventil 2 ergibt.

Damit kann direkt über die Ansteuerung 43 der Schwingankerpumpe aus der Steuer- und / oder Überwachungsschaltung 42 der Hub 50 des Stößels 5 eingestellt oder eingeregelt werden. Damit kann bei voreingestelltem Eingangsdruck nach dem Eingangsdruckregler 61 auch die Gasmenge zum Brenner 56 eingestellt oder eingeregelt werden. Dies setzt eine konstante Kurvenform und vorzugsweise eine konstante Frequenz der Wechselspannung 43 voraus. Wie aus Fig. 3 zu ersehen ist, erzeugt eine Variation der Frequenz eine sehr begrenzte Variation des Hubs 50 des Stößels 5. Mithin ist auch die Änderung der Gasmenge sehr begrenzt.

Je nach Auslegung der Spulen 22 und 23 kann die Ansteuerung 43 in unterschiedlichen Spannungsbereichen der Wechselspannung erfolgen. So kann an den Ansteuerleitungen 43 die Netzwechselspannung von 240 V, 230 V, 220 V, 110 V oder 120 V anliegen. Es kann auch eine kleinere Spannung von beispielsweise 12 V, 24 V oder 48 V von der Steuer und / oder Überwachungsschaltung 42 an den Antrieb 1 gelegt werden. Der Amplitudenwert 44 wird dabei von der Steuer- und Überwachungsschaltung 42 vorgegeben. Gemäß einer weiteren Ausführungsform erfolgt die Ansteuerung basierend auf einem geeigneten Strom durch die Spulen 22 und 23.

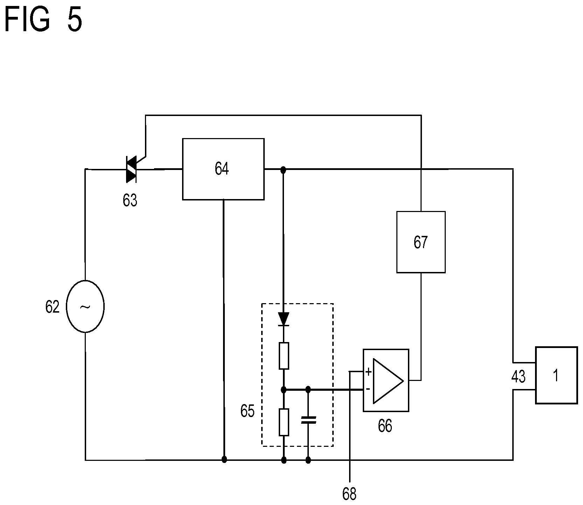

Die Kurvenform kann beispielsweise einen sinusförmigen Verlauf aufweisen. Es ist auch eine andere Kurvenform möglich, wie z. B. ein dreieckiger Verlauf oder eine Rechteckspannung oder eine Sägezahnspannung. Eine Möglichkeit zur Einstellung der Spannungsamplitude (und / oder der Stromamplitude) ist exemplarisch in Fig. 5 dargestellt.

Eine Spannungsquelle 62 erzeugt eine sinusförmige Wechselspannung, die an ein Schaltglied 63 gelegt ist, hier durch einen Triac dargestellt. Alternativ kommen beispielsweise auch IGBTs (insulated gate bipolar transistor), Transistoren, MOSFET-Transistoren und / oder Relais als Schaltglieder 63 in Betracht. Das Schaltglied 63 schaltet die Spannung ab einer bestimmten Phasenlage im Sinne einer Phasenanschnittssteuerung durch, wenn an seinem Steuereingang eine Spannung anliegt. Ein nachgeschaltetes (LC oder RC oder Chebyshev oder Butterworth) Filter 64 filtert Oberwellen heraus, die durch den Schaltvorgang entstehen, so dass am Ausgang des Filters 64 eine nahezu sinusförmige Wechselspannung 43 liegt. Die Amplitude 44 der Wechselspannung 43 wird durch die Steuerspannung am Steuerelement 63 eingestellt.

Das Wechselspannungssignal an den beiden Anschlüssen der Zuleitung 43 wird von einem Schaltungsblock 65 abgegriffen, gleichgerichtet und das gleichgerichtete Signal geglättet. Der geglättete Wert ist ein Maß für die Amplitude 44. Mit einem von einer externen Schaltung, beispielsweise von einem Mikrocontroller, erzeugten Sollwert 68 wird eine Soll-Istwert-Differenz im Soll-Istwert-Vergleicher 66 gebildet. Als Mikrocontroller können beispielsweise Einheiten vom Typ ATMEL® ATtiny, a ZILOG® ZX, a Texas Instruments® MSP340 eingesetzt werden.

Das Differenzsignal wird auf einen Regler 67 gegeben, der beispielsweise als PI-Regler, als PID-Regler oder als selbstadaptiver PI(D)-Regler ausgebildet ist. Der Regler erzeugt das Steuerspannungssignal für das Schaltelement 63.
Mit dieser Schaltungsanordnung kann die Amplitude 44 der Ansteuerung 43 (direkt) eingestellt und damit der Gasfluss durch das zugehörige Ventil 2 gesteuert werden. Selbstverständlich können Soll-Istwert-Vergleicher 66 und Regler 67, auch im Mikrokontroller selbst in Form von Software realisiert sein und die Werte über geeignete Analog /digital-Wandler bzw. Digital / Analog- Wandler mit den anderen Schaltungsteilen übertragen werden.

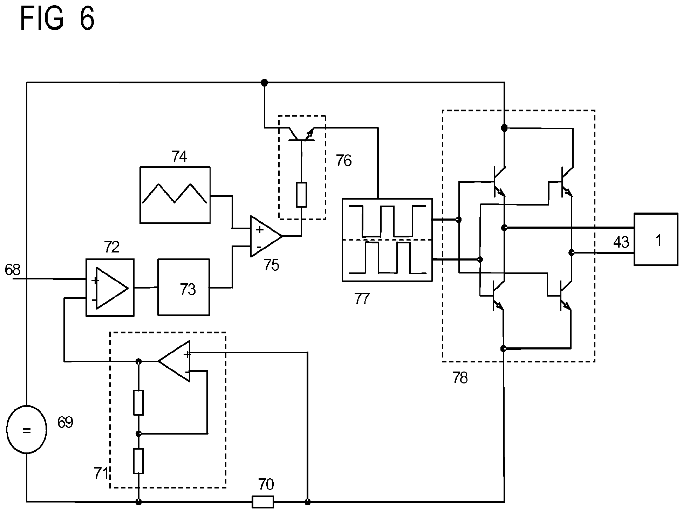

Eine weitere, bevorzugte Schaltungsanordnung zeigt Fig. 6. Der Vorteil der Schaltung liegt darin, dass der Strom durch die Schwingankerpumpe 20 des Antriebs 1 direkt geregelt wird. Über den Strom können die Magnetkräfte in den Spulen 22 und 23 (direkt und / oder linear) eingestellt werden. Mithin kann über die Stromamplitude 44 unabhängig von der Stellung 50 des Stößels 5 der Öldruck im Raum 39 (linear) eingestellt werden. Der Antrieb 1 wird über die Wechselspannung, die an der Zuleitung 43 liegt, von einer Brückenschaltung 78 angesteuert. An der Brückenschaltung 78 ist die Gleichspannung der Spannungsquelle 69 angeschlossen, die ebenso mit und Messwiderstand 70 verbunden ist. Die beiden Steuereingänge der Brükkenschaltung 78 werden mit periodischen Rechtecksignalen (oder Dreiecksignalen oder Sägezahnsignalen oder Signussignalen) aus Generator 77 angesteuert. Dabei liegt der eine Pegel auf Low, solange der Pegel des anderen Eingangs auf High liegt und umgekehrt. Damit werden jeweils die zwei diagonal liegende Transistoren der Brückenschaltung durchgeschaltet, während die anderen beiden Transistoren sperren. Durch die periodischen Signale wird im Takt der Rechtecke die Spannung an den beiden Anschlüssen der Zuleitung 43 umgepolt, so dass die erwähnte Wechselspannung an der Zuleitung 43 des Antriebs 1 liegt.

Mit anderen Worten, die vorliegende Offenbarung lehrt einen Ventilantrieb, wobei die mindestens eine Steuer- und / oder Regeleinrichtung 42 ein Mittel 70 zur Erfassung des durch die mindestens eine Zuleitung 43 fließenden Stromes umfasst.

Die vorliegende Offenbarung lehrt zudem einen Ventilantrieb, wobei das Mittel 70 zur Erfassung des durch die mindestens eine Zuleitung 43 fließenden Stromes ein Messwiderstand 70 ist.

Die Rechtecksignale des Generators 77 können beispielsweise von einem Mikrocontroller erzeugt werden, wobei der Signalverlauf so gestaltet ist, dass beide Signale zu keiner Zeit auf High-Potential liegen um einen Kurzschluss durch die Brücke zu vermeiden. Alternativ können ein Rechteckgenerator und eine Inverter-Schaltung verwendet werden. Dabei werden die Anstiegsflanken an den beiden Halbwellen der Brückenschaltung verzögert angelegt, während die abfallende Flanke jeweils nicht verzögert und so ein Kurzschluss in der Brücke vermieden wird.

Durch den Messwiderstand 70 fließt der Strom durch die Schwingankerpumpe, wobei die Spulen 22 und 23 die angelegte getaktete Spannung glätten. Über dem Messwiderstand 70 wird die Spannung, die proportional zum gemittelten Strom und damit ein Maß für die Stromamplitude 44 ist, mit einem Messverstärker 71 abgegriffen. Das Ausgangssignal des Messverstärkers ist somit ein Maß für die Stromamplitude in der Schwingankerpumpe. Zusätzlich können natürlich noch weitere Filterelemente, wie z. B. Kapazitäten, LC-Glieder oder RC-Glieder in den Stromkreis der Schwingankerpumpe oder auch in den Messkreis am Verstärker 71 zur Glättung des Signals eingebaut werden.

Mittels einer Subtraktionsschaltung als Soll- Istwert-Vergleicher 72 wird die Differenz zwischen dem Signal des Messverstärkers und einem angelegten Sollwert gebildet. Die Ausgangsdifferenz wird an einen Regler 73, ausgebildet z. B. als PI-Regler, als PID-Regler oder als selbstadaptiver PI(D)-Regler, angelegt. Das Ausgangssignal des Reglers 73 bildet die Stellgröße ab, die eine Schalteinrichtung bestehend aus den Komponenten 74, 75 und 76 ansteuert. Das Ausgangssignal des Reglers 73 wird dabei mit beispielsweise einem Dreieckssignal 74 mit Hilfe eines Komparators 75 (Operationsverstärkers) verglichen, an dessen Ausgang ein dem Stellsignal entsprechendes (pulsweitenmoduliertes) PWM-Signal erzeugt wird. Dieses PWM-Signal schaltet das Schaltglied 76, wobei die Gleichspannung 69 zerhackt wird und der Generatoreinheit 77 zugeführt wird. Wird der durch den Sollwert 68 vorgegebene Stromwert in den Spulen 22, 23 erreicht, so wird über die Taktung durch Schaltglied 76 der Generator 77 gesteuert. Die Ansteuerung erfolgt derart, dass dessen Ausgangssignale synchron mit dem PWM-Signal unterbrochen werden. Damit wird der Strom in den Spulen 22, 23 auf den vorgegebenen Sollwert 68 innerhalb der Ansteuerperiode geregelt und konstant gehalten.

Gemäß einer speziellen Ausführungsform gelangt das Signal des Messwiderstandes 70 direkt an den Eingang des Reglers 73. Gemäß einer weiteren Ausführungsform gelangt das Signal des Messwiderstandes 70 über einen Messverstärker 71 an den Eingang des Reglers 73. Gemäß einer zusätzlichen Ausführungsform gelangt anstelle eines Maßes für den Strom durch die mindestens eine Spule 22, 23 ein Maß für die an der mindestens einen Spule 22, 23 anliegende Spannung auf den Regler 73. Eine entsprechende Spannungsmessung wird anhand dem Fachmann einschlägig bekannter Messgeräte und / oder Messschaltungen durchgeführt.

Mit anderen Worten, die vorliegende Offenbarung lehrt einen Ventilantrieb, wobei die mindestens eine Steuer- und / oder Regeleinrichtung 42 zusätzlich einen Messverstärker 71 umfasst, der den Messwiderstand elektrisch kontaktiert und ausgebildet ist, ein Signal des Messwiderstandes 70 zu verstärken.

Die vorliegende Offenbarung lehrt zudem einen Ventilantrieb, wobei die mindestens eine Steuer- und / oder Regeleinrichtung 42 ein Mittel zur Erfassung der an der mindestens einen Zuleitung 43 anliegenden Spannung umfasst.

Die vorliegende Offenbarung lehrt außerdem einen Ventilantrieb, wobei die mindestens eine Steuer- und / oder Regeleinrichtung 42 einen Regler 73 umfasst, der geeignet ist, den Strom durch die mindestens eine Zuleitung 43 und / oder die an der mindestens einen Zuleitung 43 anliegende Spannung mit einem Sollwert 68 zu vergleichen, um ein Regelsignal zur Erzeugung eines Magnetfeldes durch die mindestens eine Spule 22, 23 auszugeben.

Die Frequenz der Rechtecksignale aus Generator liegt im Bereich der Frequenz des Schwingankers, d. h. zwischen 20 Hz und 100 Hz, vorteilhaft zwischen 30 Hz und 90 Hz, insbesondere aber bei den Netzfrequenzen 50 Hz bzw. 60 Hz. In besonders gelagerten Fällen liegt eine typische Frequenz im Bereich um 400 Hz. Die Frequenz des Dreieckgenerators liegt normalerweise deutlich höher als 1 kHz, typischerweise bei 10 kHz bis 30 kHz.

Die Zeitkonstante des Reglers kann größer als die Umschaltzeit (12,5 ms bis 66,6 ms) gewählt werden, so dass das Umschalten auf das Ausgangssignal des Reglers keine Auswirkung hat.

Es sind Fig. 5 und Fig. 6 nur Schaltungsbeispiele, bei denen auch einzelne Komponenten wie Soll-Istwert-Vergleicher oder Regler mit Hilfe eines Mikrocontrollers realisiert sein können. So kann z. B. an den Ausgang des Reglers 73 ein analoger Längsregler geschaltet werden.

Allen Schaltungen ist gemeinsam, dass die Energie des wechselnden Magnetfeldes in der Erregerspule 22, 23 des Schwingankers analog eingestellt wird. Es kann also der Scheitelwert des Magnetfeldes, insbesondere der Scheitelwert eines magnetischen Wechselfeldes, über einen kontinuierlichen Bereich variiert werden. Der kontinuierliche Bereich entspricht typisch dem Magnetfeld, welches bei Anliegen einer Wechselspannung zwischen 0 % und 100 % der Netzspannung durch die Spule 22, 23 erzeugt wird. Vorzugsweise entspricht der kontinuierliche Bereich dem Magnetfeld, welches bei einer Wechselspannung zwischen 10 % und 90 % der Netzspannung durch die Spule 22, 23 erzeugt wird. Besonders bevorzugt entspricht der kontinuierlich Bereich dem Magnetfeld, welches bei einer Wechselspannung zwischen 20 % und 60 % der Netzspannung durch die Spule 22, 23 erzeugt wird. Darüber wird der Öldruck 39 eingestellt und schließlich der Hub des Stößels 5 und damit die Durchflussmenge des Gases. Da der Strom proportional zum Magnetfeld (zur magnetischen Flussdichte) ist, wird mit der Strommessung die Energie des magnetischen Wechselfeldes direkt erfasst. Die Stromschaltung nach Fig. 6 stellt damit einen linearen oder im Wesentlichen linearen Zusammenhang zwischen Eingangssignal 68 und Hub 50 des Stößels 5 her.

Mit anderen Worten, die vorliegende Offenbarung lehrt eine Steuer- und / oder Regeleinrichtung 42, die ausgebildet ist, den Scheitelwert eines durch die mindestens eine Spule 22, 23 erzeugten Magnetfeldes, insbesondere den Scheitelwert eines durch die mindestens eine Spule 22, 23 erzeugten magnetischen Wechselfeldes, in einem kontinuierlichen Bereich (analog) einzustellen.

In einer weiteren Ausprägung kann mit Hilfe einer solchen Ventilanordnung aus hydraulischem Antrieb 1 und Ventil 2 der Eingangsdruckregler 61 aus Fig. 4 eingespart werden. Solches ist beispielsweise dann möglich, wenn in der Gaszuführung ein Strömungssensor, beispielsweise ein Massenstromsensor eingebaut ist. Typische Sensoren sind beispielsweise OMRON® D6F-W und / oder SENSORTECHNICS® WBA Sensoren. In einem geschlossenen Regelkreis kann dann die Gasmenge unabhängig vom Eingangsdruck ausgeregelt und / oder eingestellt werden.

Mit anderen Worten, die vorliegende Offenbarung lehrt eine Ventilanordnung mit einem Ventilantrieb 1 umfassend einen Ventilsitz 7 und einen Ventilteller 6, der ausgebildet ist, zusammen mit dem Ventilsitz 7 ein Ventil 2 zu bilden, umfassend zusätzlich mindestens einen Sensor in Form eines Strömungssensors, vorzugsweise in Form eines Massenstromsensors oder eines Differenzdrucksensors, der angeordnet ist, um eine Durchflussrate eines Mediums durch das Ventil 2 zu erfassen.

Auch kann der mechanische Eingangsdruckregler ersetzt werden, indem nach der ersten Ventilanordnung 59 ein Drucksensor eingebaut wird. Der Druck wird dann über einen geschlossenen Regelkreis mit Hilfe des Aktors der Ventilanordnung 59 eingestellt.

Weiter kann der Hub 50 über einen weiteren Hubsensor erfasst und eingestellt werden, indem ein Regelkreis über den Hub 50 als Messgröße geschlossen wird. Damit werden dann auch die Öffnung des Stellventils 2 und folglich die Durchflussrate des Mediums eindeutig bestimmt.

Mit andren Worten, die vorliegende Offenbarung lehrt eine Ventilanordnung mit einem Ventilantrieb, umfassend einen Ventilsitz 7 und einen Ventilteller 6, der ausgebildet ist, zusammen mit dem Ventilsitz 7 ein Ventil 2 zu bilden, umfassend zusätzlich mindestens einen Sensor in Form eines Hubsensors, der zur Erfassung des Hubs des Stößels 5 angeordnet ist.

Die Einstellung des Hubs 50 kann mit Hubsensor im Regelkreis oder ohne Hubsensor direkt erfolgen. Dies hat den Vorteil, dass die Öffnung eines der beiden Ventile der Ventilanordnungen 59 oder 60 auf einen Sollwert eingestellt werden kann. Damit kann bei der Öffnung der anderen Ventilanordnung sofort die richtige Gasmenge fließen, die für den Zündvorgang benötigt wird.

Mit anderen Worten, die vorliegende Offenbarung lehrt eine Ventilanordnung, wobei der mindestens eine Sensor verbunden ist mit der mindestens einen Steuer- und / oder Regeleinrichtung 42 und die mindestens eine Steuer- und / oder Regeleinrichtung 42 ausgebildet ist, ein Signal des mindestens einen Sensors auszulesen und mit einem Sollwert zu vergleichen, um ein Regelsignal zur Erzeugung eines Magnetfeldes durch die mindestens eine Spule 22, 23 auszugeben.

Die vorliegende Offenbarung lehrt ferner eine Ventilanordnung, wobei die mindestens eine Steuer- und / oder Regeleinrichtung 42 ausgebildet ist, anhand eines Signals des mindestens einen Sensors einen vorgegebenen Fluss eines Mediums durch das Ventil 2 einzustellen.

Die vorliegende Offenbarung lehrt darüber hinaus eine Anordnung umfassend eine erste Ventilanordnung und ein zweites Ventil, vorzugsweise ein zweites Gasventil, wobei die erste Ventilanordnung ausgebildet ist, ihr Ventil auf einen vorgegebenen Fluss eines Mediums einzustellen und / oder zu regeln, und wobei das zweite Ventil ausgebildet ist, dicht oder im Wesentlichen dicht zu schließen und während des Einstellens und / oder Regelns der ersten Ventilanordnung geschlossen zu sein, so dass nach Öffnen des zweiten Ventils sofort die richtige Gasmenge fließen kann.

Die vorgenannten Ventilanordnungen eignen sich unter anderem als Gasventile.

In einer bevorzugten Ausführungsform umfasst die Ventilanordnung zudem einen Bildschirm, insbesondere ein Schwarz-Weiß-Bildschirm, Graustufen-Bildschirm oder Farbbildschirm mit einer geeigneten Auflösung. Geeignete Auflösungen sind unter anderem 426 x 320 Pixel, 470 x 320 Pixel, 640 x 480 Pixel, 960 x 720 Pixel. Diese Aufzählung erhebt keinen Anspruch auf Vollständigkeit. Der Bildschirm kann beispielsweise als Flüssigkeitskristall-Bildschirm oder als Röhren-Bildschirm oder anhand organischer licht-emittierender Dioden ausgeführt sein.

Über diesen Bildschirm können beispielsweise die einzelnen Parameter der Ventilanordnung sowie Zustands- und Diagnosedaten ausgegeben werden. In einer bevorzugten Ausführungsform ist der Bildschirm der Steuer- und / oder Überwachungsschaltung 42 zugeordnet. In einer speziellen Ausführungsform lassen sich die Parameter der Steuer- und / oder Überwachungsschaltung 42 wie die Frequenz und / oder Strom und / oder Spannung an den Spulen 22, 23 über den Bildschirm ausgeben.

Mit anderen Worten, die vorliegende Offenbarung lehrt eine Ventilanordnung umfassend zusätzlich mindestens einen Bildschirm, welcher mit der Steuer- und / oder Regeleinrichtung 42 kommuniziert und geeignet ist, Parameter der Steuer- und / oder Regeleinrichtung 42 auszugeben.

Vorzugsweise verfügt die Ventilanordnung auch über mindestens ein geeignetes Eingabegerät wie Tastaturen, Tastschalter, (kapazitive) berührungsempfindliche Bildschirme, Computer-Mäuse, Spracherkennung oder ähnliche. In einer speziellen Ausführungsform lassen sich über das Eingabegerät Parameter der Steuer- und / oder Überwachungsschaltung 42 wie die Frequenz und / oder der Strom und / oder die Spannung an den Spulen 22, 23 eingeben (konfigurieren). Zur Konfiguration können zudem geeignete Mikroprozessoren und Speichereinheiten vorgesehen sein.

Es ist unter anderem vorgesehen, dass mindestens ein Bildschirm und / oder mindestens ein Eingabegerät einer Ventilanordnung außen an einem Gehäuse der Ventilanordnung angebracht sind. Damit sind der Bildschirm und / oder das Eingabegeräte für Bedienpersonal zugänglich.

Mit anderen Worten, die vorliegende Offenbarung lehrt eine Ventilanordnung umfassend zusätzlich mindestens ein Eingabemittel, welches mit der Steuer- und / oder Regeleinrichtung 42 kommuniziert und geeignet ist, Parameter der Steuer- und / oder Regeleinrichtung 42 zu schreiben.

Es ist vorgesehen, dass einzelne oder sämtliche Mikrocontroller der Ventilanordnung ein Betriebssystem aufweisen. Das Betriebssystem kann beispielsweise ein
Android® System, ein Windows® System und / oder ein Linux® System wie Meego® sein. Als Betriebssystem kommen auch solche Systeme infrage, die speziell für den Einsatz auf eingebetteten Systemen entwickelt worden sind. Ferner mag als Betriebssystem auch ein universell einsetzbares System eingesetzt werden.

Teile einer Steuer- und / oder Überwachungsschaltung 42 oder eines Verfahrens gemäß der vorliegenden Offenbarung können als Hardware, als Softwaremodul, welches von einer Recheneinheit ausgeführt wird, oder anhand eines Cloud-Rechners, oder anhand einer Kombination der vorgenannten Möglichkeiten realisiert werden. Die Software mag eine Firmware, einen Hardware-Treiber, der innerhalb eines Betriebssystems ausgeführt wird, oder ein Anwendungsprogramm umfassen. Die vorliegende Offenbarung bezieht sich also auch auf ein Rechnerprogramm-Produkt, welches die Merkmale dieser Offenbarung enthält bzw. die erforderlichen Schritte ausführt. Bei Realisierung als Software können die beschriebenen Funktionen gespeichert werden als eine oder mehrere Befehle auf einem Rechner-lesbaren Medium. Einige Beispiele Rechner-lesbarer Medien schliessen Arbeitsspeicher (RAM), magnetischen Arbeitsspeicher (MRAM), ausschliesslich lesbaren Speicher (ROM), Flash-Speicher, elektronisch programmierbares ROM (EPROM), elektronisch programmierbares und löschbares ROM (EEPROM), Register einer Recheneinheit, eine Festplatte, eine auswechselbare Speichereinheit, einen optischen Speicher, oder jegliches geeignete Medium ein, auf welches durch einen Rechner oder durch andere IT-Vorrichtungen und Anwendungen zugegriffen werden kann.

Das Genannte bezieht sich auf einzelne Ausführungsformen der Offenbarung. Verschiedene Änderungen an den Ausführungsformen können vorgenommen werden, ohne von der zu Grunde liegenden Idee abzuweichen und ohne den Rahmen dieser Offenbarung zu verlassen. Der Gegenstand der vorliegenden Offenbarung ist definiert über deren Ansprüche. Es können verschiedenste Änderungen vorgenommen werden ohne den Schutzbereich der nachfolgenden Ansprüche zu verlassen.

### Bezugszeichenliste

- 1: Antrieb
- 2: Ventil
- 3, 4: Fließrichtungen
- 5: Stößel
- 6: Ventilteller
- 7: Ventilsitz
- 8: mechanischer Kraftspeicher, insbesondere Schließfeder
- 9: Dichtung
- 10: Anschlag
- 11, 12: Durchführungen
- 13: Halterung
- 14: Membrane und / oder der Balg
- 15: ölführenden Raum
- 16: mechanischer Kraftspeicher, insbesondere Feder
- 17: Einlassöffnungen
- 18: Ventil
- 19: Becher
- 20: Schwingankerpumpe
- 21: Dichtungsring
- 22, 23: Spulen
- 24: Magnet, insbesondere Permanentmagnet
- 25: Magnetbleche
- 26: Weicheisen
- 27, 28: mechanische Kraftspeicher, insbesondere Federn
- 29: Röhrchen
- 30: Verdrängungsbecher
- 31: Ventil
- 32: Becher
- 33: Druckraum
- 34: Membrane und / oder Balg
- 35: Öffnung, insbesondere Düse
- 36: Schließkolben
- 37: mechanischer Kraftspeicher, insbesondere Feder
- 38: Kanäle
- 39: druckführender Raum
- 40, 41: schwingungsfähige Richtungen
- 42: Steuer- und / oder Regeleinrichtung
- 43: Zuleitung
- 44: Amplitude
- 45: Druck
- 46, 47, 48, 49: Druckkennlinien
- 50: Hub
- 51, 52: Hubkennlinie
- 53: Gaszufuhr
- 54: steuerbares und / oder regelbares Gebläse
- 55: Luftklappe
- 56: Brenner
- 57: Kessel
- 58: Schornstein
- 59, 60: Absperreinrichtungen
- 61: Druckregler
- 62: Spannungsquelle
- 63: Schaltglied
- 64: Filter
- 65: Schaltungsblock
- 66: Soll-Istwert-Vergleicher
- 67: Regler
- 68: Sollwert
- 69: Spannungsquelle
- 70: Messwiderstand
- 71: Messverstärker
- 72: Soll- Istwert-Vergleicher
- 73: Regler
- 74: Dreieckssignal
- 75: Komparator
- 76: Schaltglied
- 77: Generator
- 78: Brückenschaltung

## Patentansprüche

1. Ventilanordnung umfassend einen Ventilsitz (7) und einen Ventilteller (6), der ausgebildet ist, zusammen mit dem Ventilsitz (7) ein Ventil (2) zu bilden, und umfassend einen Ventilantrieb, der Ventilantrieb umfassend
eine Schwingankerpumpe (20), insbesondere eine hydraulische Schwingankerpumpe (20), mit einem Stößel (5), der ausgebildet ist, sich zusammen mit der Schwingankerpumpe (20) zu bewegen und mit dem Ventilteller (6) mechanisch so verbunden zu werden, dass sich der Ventilteller (6) durch den Stößel in eine Richtung bewegen lässt,
und die Schwingankerpumpe (20) umfasst mindestens eine Spule (22, 23), die geeignet ist, von einem elektrischen Strom durchflossen zu werden und ein Magnetfeld zu erzeugen,
und die Schwingankerpumpe (20) umfasst mindestens einen beweglichen Schwinganker (26, 29, 32, 31), der mindestens ein Ventil (31) umfasst,
und die Schwingankerpumpe (20) umfasst mindestens einen mechanischen Kraftspeicher (27, 28), der derart mit dem mindestens einen beweglichen Schwinganker (26, 29, 32, 31) verbunden ist, dass der bewegliche Schwinganker (26, 29, 32, 31) zusammen mit dem mindestens einen mechanischen Kraftspeicher (27, 28) ein Feder-Masse-Pendel bildet,
wobei der bewegliche Schwinganker (26, 29, 32, 31) angeordnet ist, um sich zusammen mit dem mindestens einen Ventil (31) unter dem Einfluss eines durch die mindestens eine Spule (22, 23) aufgebauten Magnetfeldes entlang einer vorgegebenen Richtung (41) zu bewegen,
der Ventilantrieb umfasst zusätzlich mindestens eine Zuleitung (43) und mindestens eine Steuer- und / oder Regeleinrichtung (42),
wobei die mindestens eine Zuleitung (43) die mindestens eine Spule (22, 23) und die mindestens eine Steuer- und / oder Regeleinrichtung (42) elektrisch kontaktiert,
wobei die mindestens eine Steuer- und / oder Regeleinrichtung (42) ausgebildet ist, den Scheitelwert eines durch die mindestens eine Spule (22, 23) erzeugten Magnetfeldes in einem kontinuierlichen Bereich einzustellen,
**dadurch gekennzeichnet, dass**
die Ventilanordnung zusätzlich umfasst mindestens einen Sensor in Form eines Massenstromsensors, der angeordnet ist, um eine Durchflussrate eines Mediums durch das Ventil (2) zu erfassen, und dass
der mindestens eine Sensor verbunden ist mit der mindestens einen Steuer- und / oder Regeleinrichtung (42) und die mindestens eine Steuer- und / oder Regeleinrichtung (42) ausgebildet ist, ein Signal des mindestens einen Sensors auszulesen und mit einem Sollwert zu vergleichen, um ein Regelsignal zur Erzeugung eines Magnetfeldes durch die mindestens eine Spule (22, 23) auszugeben.

2. Ventilanordnung nach Anspruch 1, wobei die Steuer- und / oder Regeleinrichtung (42) ausgebildet ist, ein durch die mindestens eine Spule (22, 23) erzeugtes Magnetfeld durch Anlegen eines Stromes und / oder einer Spannung einzustellen.

3. Ventilanordnung nach Anspruch 1 oder 2, wobei das mindestens eine Ventil (31) einen ersten Raum (32) und einen zweiten Raum (33) der Schwingankerpumpe (20) separiert und ausgebildet ist, zu öffnen bei einer Bewegung des mindestens einen Ventils (31) in die vorgegebene Richtung (41), sodass ein Fluid vom ersten Raum (32) in den zweiten Raum (33) strömt.

4. Ventilanordnung nach einem der Ansprüche 1 bis 3, wobei die mindestens eine Steuer- und / oder Regeleinrichtung (42) ein Mittel (70) zur Erfassung des durch die mindestens eine Zuleitung (43) fließenden Stromes umfasst.

5. Ventilanordnung nach Anspruch 4, wobei das Mittel (70) zur Erfassung des durch die mindestens eine Zuleitung (43) fließenden Stromes ein Messwiderstand (70) ist.

6. Ventilanordnung nach einem der Ansprüche 4 oder 5, wobei die mindestens eine Steuer- und / oder Regeleinrichtung (42) zusätzlich einen Messverstärker (71) umfasst, der den Messwiderstand elektrisch kontaktiert und ausgebildet ist, ein Signal des Messwiderstandes (70) zu verstärken.

7. Ventilanordnung nach einem der Ansprüche 2 oder 3, wobei die mindestens eine Steuer- und / oder Regeleinrichtung (42) ein Mittel zur Erfassung der an der mindestens einen Zuleitung (43) anliegenden Spannung umfasst.

8. Ventilanordnung nach einem der Ansprüche 2 bis 7, wobei die mindestens eine Steuer- und / oder Regeleinrichtung (42) einen Regler (67) umfasst, der geeignet ist, den Strom durch die mindestens eine Zuleitung (43) und / oder die an der mindestens einen Zuleitung (43) anliegende Spannung mit einem Sollwert (68) zu vergleichen, um ein Regelsignal zur Erzeugung eines Magnetfeldes durch die mindestens eine Spule (22, 23) auszugeben.

9. Ventilanordnung mit einem Ventilantrieb gemäß einem der Ansprüche 1 bis 8, umfassend einen Ventilsitz (7) und einen Ventilteller (6), der ausgebildet ist, zusammen mit dem Ventilsitz (7) ein Ventil (2) zu bilden,
umfassend zusätzlich mindestens einen Sensor in Form eines Hubsensors, der zur Erfassung des Hubs des Stößels (5) angeordnet ist.

10. Ventilanordnung gemäß Anspruch 1, wobei die mindestens eine Steuer- und / oder Regeleinrichtung (42) ausgebildet ist, anhand eines Signals des mindestens einen Sensors einen vorgegebenen Fluss eines Mediums durch das Ventil (2) einzustellen.

11. Ventilanordnung gemäß einem der vorangegangenen Ansprüche, wobei die Ventilanordnung geeignet ist, das Ventil (2) derart dicht zu schließen, dass die Ventilanordnung als Sicherheits-Absperreinrichtung ausgebildet ist.

12. Anordnung umfassend eine erste Ventilanordnung nach einem der vorangegangenen Ansprüche und ein zweites Ventil, vorzugsweise ein zweites Gasventil, wobei die erste Ventilanordnung ausgebildet ist, ihr Ventil auf einen vorgegebenen Fluss eines Mediums einzustellen und / oder zu regeln, und wobei das zweite Ventil ausgebildet ist, dicht oder im Wesentlichen dicht zu schließen und während des Einstellens und / oder Regelns der ersten Ventilanordnung geschlossen zu sein.

13. Ventilanordnung gemäß einem der Ansprüche 1 bis 11 umfassend zusätzlich mindestens ein Eingabemittel, welches mit der Steuer- und / oder Regeleinrichtung (42) kommuniziert und geeignet ist, Parameter der Steuer- und / oder Regeleinrichtung (42) zu schreiben.

## Claims

1. Valve assembly comprising a valve seat (7) and a valve disc (6) which is embodied to form a valve (2) together with the valve seat (7) and comprising a valve drive, the valve driving comprising
an oscillating armature pump (20), in particular a hydraulic oscillating armature pump (20), with a plunger (5) which is embodied to move together with the oscillating armature pump (20) and to be mechanically connected to the valve disc (6) such that the valve disc (6) can be moved in one direction by the plunger,
and the oscillating armature pump (20) comprises at least one coil (22, 23) which is suited to being passed through by an electric current and to generating a magnetic field,
and the oscillating armature pump (20) comprises at least one moveable oscillating armature (26, 29, 32, 31) which comprises at least one valve (31),
and the oscillating armature pump (20) comprises at least one mechanical energy store (27, 28), which is connected to the at least one movable oscillating armature (26, 29, 32, 31) such that the moveable oscillating armature (26, 29, 32, 31) together with the at least one mechanical energy store (27, 28) forms a spring-mass pendulum,
wherein the movable oscillating armature (26, 29, 32, 31) is arranged in order, together with the at least one valve (31) under the influence of a magnetic field established by the at least one coil (22, 23), to move along a predetermined direction (41),
the valve drive additionally comprises at least one feed line (43) and at least one control and/or regulating device (42).
wherein the at least one feed line (43) contacts the at least one coil (22, 23) and the at least one control and/or regulating device (42) electrically,
wherein the at least one control and/or regulating device (42) is embodied to adjust the peak value of a magnetic field generated by the at least one coil (22, 23) in a continuous range,
**characterised in that**
the valve assembly additionally comprises at least one sensor in the form of a mass flow sensor, which is arranged in order to detect a flow rate of a medium through the valve (2), and that
the at least one sensor is connected to the at least one control and/or regulating device (42) and the at least one control and/or regulating device (42) is embodied to read out a signal of the at least one sensor and to compare the same with a target value in order to output a regulating signal in order to generate a magnetic field through the at least one coil (22, 23).

2. Valve assembly according to claim 1, wherein the control and/or regulating device (42) is embodied to adjust a magnetic field generated by the at least one coil (22, 23) by applying a current and/or a voltage.

3. Valve assembly according to claim 1 or 2, wherein the at least one valve (31) separates a first room (32) and a second room (33) of the oscillating armature pump (20) and is embodied to open with a movement of the at least one valve (31) in the predetermined direction (41), so that a fluid flows from the first space (32) into the second space (33).

4. Valve assembly according to one of claims 1 to 3, wherein the at least one control and/or regulating device (42) comprises a means (70) for detecting the current flowing through the at least one feed line (43).

5. Valve assembly according to claim 4, wherein the means (70) for detecting the current flowing through the at least one feed line (43) is a measuring resistor (70).

6. Valve assembly according to one of claims 4 or 5, wherein the at least one control and/or regulating device (42) additionally comprises a measuring amplifier (71), which electrically contacts the measuring resistor and is embodied to amplify a signal of the measuring resistor (70).

7. Valve assembly according to one of claims 2 or 3, wherein the at least one control and/or regulating device (42) comprises a means for detecting the voltage present on the at least one feed line (43).

8. Valve assembly according to one of claims 2 to 7, wherein the at least one control and/or regulating device (42) comprises a regulator (67), which is suited to comparing the current through the at least one feed line (43) and/or the voltage present on the at least one feed line (43) with a target value (68) in order to output a regulating signal in order to generate a magnetic field through the at least one coil (22, 23).

9. Valve assembly with a valve drive according to one of claims 1 to 8, comprising a valve seat (7) and a valve disc (6), which is embodied, together with the valve seat (7), to form a valve (2), comprising in addition at least one sensor in the form of a lift sensor which is arranged in order to detect the lift of the plunger (5).

10. Valve assembly according to claim 1, wherein the at least one control and/or regulating device (42) is embodied to adjust a predetermined flow of a medium through the valve (2) on the basis of a signal of the at least one sensor.

11. Valve assembly according to one of the preceding claims, wherein the valve assembly is suited to tightly closing the valve (2) such that the valve assembly is embodied as a safety shut-off device.

12. Assembly comprising a first valve assembly according to one of the preceding claims and a second valve, preferably a second gas valve, wherein the first valve assembly is embodied to adjust and/or regulate its valve to a predetermined flow of a medium and wherein the second valve is embodied to close tightly or substantially tightly and to be closed during the adjustment and/or regulation of the first valve assembly.

13. Valve assembly according to one of claims 1 to 11, comprising in addition at least one input means, which communicates with the control and/or regulating device (42) and is suited to writing parameters of the control and/or regulating device (42).

## Revendications

1. Système de vannes comportant un siège de vanne (7) et une tête de vanne (6) qui est conçue pour former une vanne (2) avec le siège de vanne (7), et comprenant un actionneur de vanne, l'actionneur de vanne comprenant
une pompe vibrante (20), et plus particulièrement une pompe vibrante hydraulique (20), avec un poussoir (5) qui est conçu pour se déplacer ensemble avec la pompe vibrante (20) et être relié mécaniquement à la tête de vanne (6) de telle sorte que la tête de vanne (6) peut être déplacée par le poussoir dans une direction
et la pompe vibrante (20) comprend au moins une bobine (22, 23) adaptée pour être traversée par un courant électrique et générer un champ magnétique,
et la pompe vibrante (20) comprend au moins une armature oscillante mobile (26, 29, 32, 31) qui comprend au moins une vanne (31),
et la pompe vibrante (20) comprend au moins un accumulateur de force mécanique (27, 28) qui est relié de manière telle à l'au moins une armature oscillante mobile (26, 29, 32, 31) que l'armature oscillante mobile (26, 29, 32, 31) forme conjointement avec l'au moins un accumulateur de force mécanique (27, 28) un pendule ressort-masse,
l'armature oscillante mobile (26, 29, 32, 31) étant agencée pour se déplacer, ensemble avec l'au moins une vanne (31) sous l'influence d'un champ magnétique généré par l'au moins une bobine (22, 23), le long d'une direction donnée (41),
l'actionneur de vanne comprend en outre au moins une conduite d'alimentation (43) et au moins un dispositif de commande et/ou de réglage (42),
l'au moins une conduite d'alimentation (43) établissant un contact électrique avec l'au moins une bobine (22, 23) et l'au moins un dispositif de commande et/ou de réglage (42), l'au moins un dispositif de commande et/ou de réglage (42) étant conçu pour régler la valeur de crête d'un champ magnétique généré par l'au moins une bobine (22, 23) dans une plage continue,
**caractérisé en ce que**
le système de vannes comprend en outre au moins un capteur sous la forme d'un capteur de courant de masse qui est agencé pour détecter un débit d'un fluide traversant la vanne (2)
et **en ce que**
l'au moins un capteur est relié à l'au moins un dispositif de commande et/ou de réglage (42), et l'au moins un dispositif de commande et/ou de réglage (42) est conçu pour extraire un signal de l'au moins un capteur et le comparer avec une valeur de consigne pour émettre un signal de réglage pour générer un champ magnétique par l'au moins une bobine (22, 23).

2. Système de vannes selon la revendication 1, le dispositif de commande et/ou de réglage (42) étant conçu pour régler un champ magnétique généré par l'au moins une bobine (22, 23) en appliquant un courant et/ou une tension.

3. Système de vannes selon la revendication 1 ou 2, l'au moins une vanne (31) séparant un premier espace (32) et un deuxième espace (33) de la pompe vibrante (20) et étant conçue pour s'ouvrir lors d'un mouvement de l'au moins une vanne (31) dans la direction donnée (41), de sorte qu'un fluide passe du premier espace (32) dans le deuxième espace (33).

4. Système de vannes selon l'une des revendications 1 à 3, l'au moins un dispositif de commande et/ou de réglage (42) comportant un moyen (70) de détection du flux passant par l'au moins une conduite d'alimentation (43).

5. Système de vannes selon la revendication 4, le moyen (70) de détection du courant passant par l'au moins une conduite d'alimentation (43) étant une résistance de mesure (70).

6. Système de vannes selon l'une des revendications 4 ou 5, l'au moins un dispositif de commande et/ou de réglage (42) comprenant en outre un amplificateur de mesure (71) qui établit un contact électrique avec la résistance de mesure et est conçu pour amplifier un signal de la résistance de mesure (70).

7. Système de vannes selon l'une des revendications 2 ou 3, l'au moins un dispositif de commande et/ou de réglage (42) comprenant un moyen de détection de la tension appliquée à l'au moins une conduite d'alimentation (43).

8. Système de vannes selon l'une des revendications 2 à 7, l'au moins un dispositif de commande et/ou de réglage (42) comprenant un régulateur (67) adapté pour comparer le courant passant par l'au moins une conduite d'alimentation (43) et/ou la tension appliquée à l'au moins une conduite d'alimentation (43) avec une valeur de consigne (68) pour émettre un signal de réglage pour générer un champ magnétique par l'au moins une bobine (22, 23).

9. Système de vannes avec un actionneur de vanne selon l'une des revendications 1 à 8, comprenant un siège de vanne (7) et une tête de vanne (6) qui est conçue pour former une vanne (2) avec le siège de vanne (7),
comprenant en outre au moins un capteur se présentant sous la forme d'un capteur de course qui est agencé pour détecter la course du poussoir (5).

10. Système de vannes selon la revendication 1, l'au moins un dispositif de commande et/ou de réglage (42) étant conçu pour régler, à l'aide d'un signal de l'au moins un capteur, un flux donné d'un fluide passant par la vanne (2).

11. Système de vannes selon l'une des revendications précédentes, le système de vannes étant adapté pour fermer la vanne (2) de manière tellement étanche que le système de vannes est réalisé en tant que dispositif d'arrêt de sécurité.

12. Système comprenant un premier système de vannes selon l'une des revendications précédentes et une deuxième vanne, de préférence une deuxième vanne de gaz, le premier système de vannes étant conçu pour ajuster et/ou régler sa vanne sur un flux donné d'un fluide, et la deuxième vanne étant conçue pour fermer de manière étanche ou sensiblement étanche et être fermée pendant l'ajustement et/ou le réglage du premier système de vannes.

13. Système de vannes selon l'une des revendications 1 à 11, comprenant en outre au moins un moyen d'entrée qui communique avec le dispositif de commande et/ou de réglage (42) et est adapté pour écrire des paramètres du dispositif de commande et/ou de réglage (42).
